(19) Europäisches Patentamt
European Patent Office
Office européen des brevets

(11) Publication number: 0 365 481
A1

(12) # EUROPEAN PATENT APPLICATION

(21) Application number: 89810773.5

(51) Int. Cl.5: C08K 5/343

(22) Date of filing: 10.10.89

(30) Priority: 19.10.88 US 259946
19.10.88 US 259955

(43) Date of publication of application:
25.04.90 Bulletin 90/17

(84) Designated Contracting States:
BE DE ES FR GB IT NL

(71) Applicant: CIBA-GEIGY AG
Klybeckstrasse 141
CH-4002 Basel(CH)

(72) Inventor: Seltzer, Raymond
11 Angus Lane
New City New York 10956(US)
Inventor: Cortolano, Frank P.
3 East Maple Street
Valhalla New York 10595(US)
Inventor: Galbo, James P.
119 East Hartsdale Avenue
Hartsdale New York 10530(US)
Inventor: Patel, Ambelal R.
114 Huntley Drive
Ardsley New York 10502(US)
Inventor: Ravichandran, Ramanathan
No.7 Kensington Court
Nanuet New York 10954(US)

(54) **Polymeric substrates stabilized with N-substituted hindered amines.**

(57) Hindered amines based on various 2,2,6,6-tetralkylated nitrogen-containing heterocyclic moieties wherein the hindered nitrogen atom on the ring is substituted with $OR_1$ substituents and the 4-position of the ring is substituted with $OR_2$ substituents are effective in protecting a variety ofpolymeric substrates against the adverse effects of light, heat and oxygen.

EP 0 365 481 A1

Xerox Copy Centre

## POLYMERIC SUBSTRATES STABILIZED WITH N-SUBSTITUTED HINDERED AMINES

It is well known that polymeric substrates undergo progressive changes in their physical properties, including color changes, embrittlement and loss of mechanical properties, when exposed to processing conditions or to sunlight or other sources of ultraviolet radiation. Retardation of these deleterious effects has been achieved utilizing a broad range of additives, including those exhibiting light-stabilizing properties, such additives including benzophenones, benzotriazoles, substituted benzoic acid ester, nickel complexes, aromatic oxamides and sterically hindered amines.

The latter group of chemicals and their stabilizing activity in a wide variety of substrates are likewise well known and have been described in a broad range of patents and technical literature. In view of the extensive nature of such art, reference is made to U.S. 4,426,471, U.S. 4,426,472, U.S. 4,344,876, U.S. 4,590,231 and U.S. 4,691,015 for a summary of representative hindered amine light stabilizers.

It has now been surprisingly determined that the polymeric substrates recited herein can be effectively stabilized by the incorporation therein of the indicated N-$OR_1$ substituted hindered amines. Thus, these compounds serve to protect the polymeric materials against the adverse effects of actinic, oxidative and thermal degradation. In particular, they serve to reduce color formation resulting from processing conditions and are especially effective in stabilizing organic materials against the degradative effects of actinic stimuli. Since these stabilizers are considerably less basic than conventional hindered amines, they also have little or no determinal effect on the thermal stability of the polymer during processing at elevated temperatures. They also protect the polymers against the gas fading that may be experienced upon exposure to the combustion products of natural gas. Certain effects are specifically to be noted in polyvinyl chloride formulations wherein conventional hindered amines adversely impact on thermal stability during processing. Thus, these PVC formulations contain various organotin and/or mixed metal heat stabilizers for the specific purpose of providing thermal stability during processing and subsequent use. The conventional hindered amines added to provide light stability negate at least a portion of the thermal stability thereby resulting in discolored and/or degraded products. In contrast, the substitution pattern of the instant compounds, particularly the -NOAlkyl compounds, provides the desired long term light stability without a substantial concomitant negation of thermal stability. Improvements are also to be seen in weatherability during outdoor exposure. In addition, the instant compounds significantly reduce the pigment interactions such as color drift and flocculation encountered with the conventional hindered amines when present in pigmented substrates.

The substituted hindered amine compounds applicable for use in this invention contain a group of the formula (A)

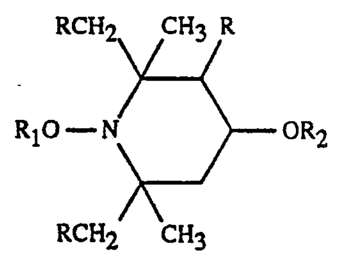

(A)

wherein

R is hydrogen or methyl,

$R_1$ is $C_1$-$C_8$alkyl, $C_2$-$C_{18}$alkenyl, $C_2$-$C_{18}$alkynyl, $C_5$-$C_{12}$cycloalkyl, $C_6$-$C_{10}$bicycloalkyl, $C_5$-$C_8$cycloalkenyl, $C_6$-$C_{10}$aryl, $C_7$-$C_9$aralkyl, $C_7$-$C_9$aralkyl substituted by $C_1$-$C_4$alkyl or $C_6$-$C_{10}$aryl, or $R_1$ is $-\overset{O}{\overset{\|}{C}}-D$ wherein D is $C_1$-$C_{18}$alkyl, C-$C_{18}$alkoxy, phenyl, phenyl substituted by hydroxy, $C_1$-$C_4$alkyl or $C_1$-$C_4$alkoxy, or amino or amino mono- or disubstituted by $C_1$-$C_{12}$alkyl or phenyl and

$R_2$ is hydrogen, $C_1$-$C_{18}$alkyl optionally interrupted by one or more oxygen atoms, $C_2$-$C_{12}$alkenyl, $C_6$-$C_{10}$aryl, $C_7$-$C_{18}$aralkyl, glycidyl, a monovalent acyl radical of an aliphatic, cycloaliphatic, araliphatic or aromatic carboxylic acid, or of a carbamic acid, preferably an acyl radical of an aliphatic carboxylic acid having 2-18 C atoms, of a cycloaliphatic carboxylic acid having 5-12 C atoms or of an aromatic carboxylic acid have 7-15 C atoms.

If in formula (A) $R_1$ or $R_2$ are $C_1$-$C_{18}$alkyl, they are for example methyl, ethyl, n-propyl, n-butyl, sec-butyl, tert-butyl, n-hexyl, n-octyl, 2-ethylhexyl, n-nonyl, n-decyl, n-undecyl, n-dodecyl, n-tridecyl, n-tetradecyl, n-hexadecyl or n-octadecyl. Typical cycloalkyl groups include cyclopentyl and cyclohexyl; typical cycloalkenyl groups include cyclohexenyl; while typical aralkyl groups include benzyl, alpha-methylbenzyl, alpha,alpha-dimethylbenzyl or phenethyl. $C_1$-$C_{12}$alkyl and cyclohexyl are preferred.

If $R_2$ is a monovalent acyl radical of a carboxylic acid, it is for example an acyl radical of acetic acid, propionic acid, butyric acid, valeric acid, capronic acid, stearic acid, salicylic acid, benzoic acid, hexahydrobenzoic acid or $\beta$-(3,5-di-tert-butyl-4-hydroxyphenyl) propionic acid.

If $R_2$ is a monovalent acyl radical of a carbamic acid it is preferably a radical of an aliphatic $C_2$-$C_{13}$carbamic acid or of phenyl carbamic acid. Examples for aliphatic carbamic acids are methyl, butyl, octyl, dodecyl, dimethyl, diethyl or dibutyl carbamic acid.

Preferably $R_1$ is $C_1$-$C_{18}$alkyl, $C_2$-$C_{18}$alkenyl, $C_5$-$C_{12}$cycloalkyl, $C_7$-$C_9$aralkyl or $C_7$-$C_9$aralkyl substituted by alkyl or aryl.

The following compounds are examples of compounds of formula (A):

1. 1,4-dimethoxy-2,2,6,6-tetramethylpiperidine
2. 4-benzyloxy-1-ethoxy-2,2,6,6-tetramethylpiperidine
3. 1,4-dibenzyloxy-2,2,6,6-tetramethylpiperidine
4. 1-cyclohexyloxy-4-glycidyloxy-2,2,6,6-tetrametyhlpiperidine
5. 1-cyclohexyloxy-4-octadecanoyloxy-2,2,6,6-tetramethylpiperidine
6. 4-benzoyloxy-1-methoxy-2,2,6,6-tetramethylpiperidine
7. 4-benzoyloxy-1-cyclohexyloxy-2,2,6,6-tetramethylpiperidine
8. 4-benzoyloxy-1-($\alpha$-methylbenzyloxy)-2,2,6,6-tetramethylpiperidine
9. 4-benzoyloxy-1-benzyloxy-2,2,6,6-tetramethylpiperidine
10. (1-cyclohexyloxy-2,2,6,6-tetramethylpiperidin-4-yl)-3,5-di-tert.butyl-4-hydroxybenzoate
11. 1,4-diacetoxy-2,2,6,6-tetramethylpiperidine
12. 1-acetoxy-4-hydroxy-2,2,6,6-tetramethylpiperidine
13. 1-propionoxy-4-stearoyloxy-2,2,6,6-tetramethylpiperidine
14. 1-acetoxy-4-benzyloxy-2,2,6,6-tetramethylpiperidine
15. (1-acetoxy-2,2,6,6-tetramethylpiperidin-4-yl)-4-hydroxy-3,5-di-tert.butylbenzoate
16. 1,4-di(-4-hydroxy-3,5-di-tert.butylbenzoyloxy)-2,2,6,6-tetramethylpiperidine
17. n-butyl-(4-benzoyloxy-2,2,6,6-tetramethylpiperidin-4-yl)-carbonate
18. 1,4-di-(2-ethylhexanoyloxy)-2,2,6,6-tetramethylpiperidine
19. 1-carbamoyloxy-4-benzoyloxy-2,2,6,6-tetramethylpiperidine
20. 1-dimethylcarbamoyloxy-4-benzoyl-2,2,6,6-tetramethylpiperidine
21. 4-benzoyloxy-1-heptyloxy-2,2,6,6-tetramethylpiperidine

The compounds of formula (A) are generally prepared by oxidizing the corresponding NH derivatives with an appropriate peroxy compound such as hydrogen peroxide or tert-butyl hydroperoxide in the presence of a metal carbonyl or metal oxide catalyst followed by reduction of the oxyl intermediate formed to the desired N-hydroxy derivative, preferably by catalytic hydrogenation. Thereafter, the N-acyloxy derivatives are prepared by reacting the N-hydroxy hindered amine with the appropriate acid chloride, anhydride, isocyanate or substituted chloroformate. The catalytic hydrogenation can also be conducted in acetic anhydride to prepare the N-acetoxy derivative.

O-alkyl substituted N-hydroxy derivatives can be synthesized by several routes. The N-hydroxy derivative can be alkylated with sodium hydride and halogenated hydrocarbons such as benzyl bromide and ethyl iodide. N-methoxy variants can be prepared by thermolysis of a chlorobenzene solution of nitroxyl radical and di-tert-butyl peroxide. The product is formed by a coupling reaction between the nitroxyl radical and methyl radical generated from $\beta$-scission of a t-butoxy radical. Other N-alkoxy variants are synthesized by coupling nitroxyl radicals with hydrocarbon radicals generated from thermal decomposition of di-tert-butyl peroxide in the presence of hydrocarbon solvents such as cylcohexane, toluene, and ethylbenzene.

A preferred approach is the preparation of N-alkoxy hindered amines directly from the NH derivatives. For example, a mixture of 4-benzoyloxy-2,2,6,6-tetramethylpiperidine, aqueous t-butyl hydroperoxide, molybdenum oxide, and ethylbenzene gives a 90 % yield of the N-alpha-methylbenyloxy piperidine.

The NH derivative precursors are largely commercially available or can be prepared by known methods.

The use of the compounds of formula (A) as stabilizers for ambient curable or acid catalized thermosetting coatings is subject of two prior patent applications now published as European Application EP-A-309 400 and 309 402.

According to the instant invention these compounds are also suitable for stabilizing polyolefins or those organic polymers which contain hetero atoms, double bonds or aromatic rings.

The polyolefins may be homopolymers or copolymers of an alpha olefin.

The polyolefins useful in the instant compositions are the polymers derived from monoolefins, such as polyethylene, which can be crosslinked, polypropylene, polyisobutylene, polybutene-1, poly-3-methylbutene-1 and poly-4-methyl-pentene-1. Polyethylene may be for example medium density, high density or linear low density polyethylene.

Mixtures of the homopolymers cited above, for example mixtures of polypropylene and polyethylene, polypropylene and polybutene-1-, or polypropylene and polyisobutylene and the like, may also be used.

Copolymers of monolefins may also be used in the instant compositions, for example ethylene/propylene copolymers, propylene-butene-1 copolymers, propylene/octene-1 copolymers, ethylene/butene-1 copolymers, ethylene/octene-1 copolymers as well as ethylene/vinyl acetate copolymers.

Especially preferred polyolefin substrates are polypropylene, low density polyethylene, medium density polyethylene, high density polyethylene, linear low density polyethylene, poly(butene-1), ethylene/vinyl acetate copolymer, ethylene/propylene copolymer and copolymers of ethylene or of propylene with higher alpha olefins.

The most preferred polyolefin substrate polypropylene, high density polyethylene, ethylene/propylene copolymer or a copolymer of ethylene or of propylene with another alpha olefin.

Examples of organic polymers whch contain hetero atoms, double bonds or aromatic rings are the following:

1. polymers derived from doubly unsaturated hydrocarbons, e.g. polyisoprene or polybutadiene;

2. polystyrene;

3. copolymers of styrene or alpha-methyl styrene with dienes or acryl derivatives, such as styrene-butadiene, styrene-acrylonitrile, styrene-acrylonitrile-methacrylate, mixtures of high impact strength from styrene-copolymersand another polymer, such as polyacrylate, a diene-polymer or an ethylene propylene-diene terpolymer, as well as block copolymers of styrene such as styrene-butadiene-styrene, styrene-isoprene-styrene or styrene-ethylene/butylene-styrene;

4. graft polymers of styrene, such as styrene or polybutadiene, styrene and acrylonitrile on polybutadiene, as well as mixtures with the copolymers mentioned under (3), such as those known as ABS polymers;

5. halogen-containing vinyl polymers, such as polyvinyl chloride, polyvinylidene chloride, polyvinylfluoride, polychloroprene, chlorinated rubber, vinyl chloride/vinylidene chloride copolymers, vinyl chloride/vinyl acetate copolymers or vinylidene chloride/vinyl acetate copolymers;

6. polymers derived from alpha-beta-unsaturated acids and derivatives thereof, polyacrylates and polymethacrylates, polyacrylic amides and polyacrylonitrile;

7. polymers derived from unsaturated alcohols or their acyl derivatives or acetals, such as polyvinyl alcohol, polyvinyl acetate, polyvinyl stearate, polyvinyl benzoate, polyvinyl butyral, polyallyl phthalate, polyallyl melamine and copolymers thereof with other vinyl compounds, such as ethylene/vinyl acetate copolymers;

8. polyacetals such as polyoxymethylene, and also those polyoxymethylenes containing as comonomers, e.g. ethylene oxide;

9. polyurethanes;

10. polycarbonates;

11. aliphatic and aromatic polyamides and copolyamides derived from diamines and dicarboxylic acids and/or from aminocarboxylic acids or the corresponding lactams, such as polyamide 6, polyamide 6/6, polyamide 6/10, polyamide 11 and polyamide 12;

12. polyesters derived from dicarboxylic acids and dialcohols and/or from hydroxycarboxylic acids or corresponding lactones, such as polyethylene glycol terephthalate and poly-1,4-dimethylol-cyclohexaneterephthalate.

Substrates of particular interest are polyvinyl chloride, particularly pigmented rigid polyvinyl chloride, polyurethanes and styrenic polymers such as ABS polymers.

In general, the compounds of formula (A) are employed in from about 0.01 to about 5 % by weight of the stabilized composition, although this will vary with the particular substrate and application. An advantageous range is from about 0.05 to about 2 %, and especially 0.1 to about 1 %.

The stabilizers of the instant invention may readily be incorporated into the indicated polymeric substrates by conventional techniques, at any convenient state prior to the manufacture of shaped articles therefrom. For example, the stabilizer may be mixed with the polymer in dry powder form, or a suspension or emulsion of the stabilizer may be mixed with a solution, suspension, or emulsion of the polymer. The resulting stabilized polymer composition of the invention may optionally also contain various conventional additives, such as the following.

1. Antioxidants

1.1. Alkylated monophenols, for example2,6-di-tert-butyl-4-methyl-phenol, 2-tert-butyl-4,6-dimethylphenol, 2,6-di-tert-butyl-4-ethylphenol, 2,6-di-tert-butyl-4-n-butylphenol, 2,6-di-tert-butyl-4-iso-butylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexyl-phenol, 2,6-di-tert-butyl-4-methoxymethylphenol, 2,6-di-nonyl-4-methyl-phenol.

1.2. Alkylated hydroquinones, for example 2,6-di-tert-butyl-4-methoxy- phenol, 2,5-di-tert-butylhydroquinone, 2,5-di-tert- amylhydroquinone, 2,6-diphenyl-4-octadecyloxyphenol.

1.3. Hydroxylated thiodiphenyl ethers, for example 2,2′-thiobis(6-tert-butyl-4-methylphenol), 2,2′-thiobis(4-octylphenol), 4,4′-thiobis(6-tert-butyl-3-methylphenol), 4,4′-thiobis(6-tert-butyl-2-methylphenol).

1.4. Alkylidenebisphenols, for example 2,2′-methylenebis(6-tert-butyl-4-methylphenol), 2,2′-methylenebis(6-tert-butyl-4-ethylphenol), 2,2′-methylenebis[4-methyl-6-(α-methylcyclohexyl)phenol], 2,2′-methylenebis(4-methyl-6-cyclohexylphenol), 2,2′-methylenebis(6-nonyl-4-methylphenol), 2,2′-methylenebis-(4,6-di-tert-butylphenol), 2,2′-ethylidenebis(4,6-di-tert-butylphenol), 2,2′-ethylidenebis(6-tert-butyl-4-isobutylphenol), 2,2′-methylenebis[6-(α-methylbenzyl)-4-nonylphenol], 2,2′-methylenebis[6- (α,α-dimethylbenzyl)-4-nonylphenol], 4,4′-methylenebis(2,6-di-tert-butylphenol), 4,4′-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)3-n-dodecylmercaptobutane, ethylene glycol bis[3,3-bis-(3′-tert-butyl-4′-hydroxyphenyl)butyrate], bis(3-tert-butyl-4-hydroxy-5-methyl-phenyl)dicyclopentadiene, bis[2-(3′-tert-butyl-2′-hydroxy-5′-methyl- benzyl)-6-tert-butyl-4-methylphenyl]terephthalate.

1.5. Benzyl compounds, for example 1,3,5-tris(3,5-di-tert-butyl-4-hydroxybenzyl)-2,4,6-trimethylbenzene, bis(3,5-di-tert-butyl-4-hydroxy-benzyl) sulfide, isooctyl 3,5-di-tert-butyl-4-hydroxybenzylmercapto-acetate, bis(4-tert-butyl-3-hydroxy-2,6-dimethylbenzyl) dithiolterephthalate, 1,3,5-tris(3,5-di-tert-butyl-4-hydroxybenzyl) isocyanurate, 1,3,5-tris(4-tert-butyl-3-hydroxy-2,6-dimethylbenzyl) isocyanurate, dioctadecyl 3,5-di-tert-butyl-4-hydroxy benzylphosphonate, calcium salt of monoethyl 3,5-di-tert-butyl-4-hydroxybenzylphosphonate, 1,3,5-tris-(3,5-dicyclohexyl-4-hydroxybenzyl)isocyanurate.

1.6. Acylaminophenols, for example lauric acid 4-hydroxyanilide, stearic acid 4-hydroxyanilide, 2,4-bis(octylmercapto)-6-(3,5-di-tert-butyl-4-hydroxyanilino)-s-triazine, octyl N-(3,5-di-tert-butyl-4-hydroxyphenyl)-carbamate.

1.7. Esters of β-(3,5-di-tert-butyl-4-hydroxyphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N′-bis(hydroxyethyl)oxalic acid diamide.

1.8. Esters of β-(5-tert-butyl-4-hydroxy-3-methylphenol)propionic aoid with mono- or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N′-bis(hydroxyethyl)oxalic acid diamide.

1.9. Esters of β-(3,5-dicyclohexyl-4-hydroxyphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N′-bis(hydroxyethyl)oxalic acid diamide.

1.10. Amides of β-(3,5-di-tert-butyl-4-hydroxyphenyl)propionic acid e.g. N,N′-bis(3,5-di-tert-butyl-4-hydroxyphenylpropionyl)hexamethylene-diamine, N,N′-bis(3,5-di-tert-butyl-4-hydroxyphenylpropionyl)trimethylene-diamine, N,N′-bis(3,5-di-tert-butyl-4-hydroxyphenylpropionyl)hydrazine.

2. UV absorbers and light stabilisers

2.1. 2-(2′-Hydroxyphenyl)benzotriazoles, for example the 5′-methyl, 3′,5′-di-tert-butyl, 5′-tert-butyl, 5′-(1,1,3,3-tetramethylbutyl), 5-chloro-3′,5′-di-tert-butyl, 5-chloro-3′-tert-butyl-5′-methyl, 3′-sec-butyl-5′-tert-butyl, 4′-octoxy, 3′,5′-di-tert-amyl and3′,5′-bis(α,α- dimethylbenzyl) derivatives.

2.2. 2-Hydroxybenzophenones, for example the 4-hydroxy, 4-methoxy, 4-octoxy, 4-decyloxy, 4-dodecyloxy, 4-benzyloxy, 4,2′,4′-trihydroxy and 2′-hydroxy-4,4′-dimethoxy derivatives.

2.3. Esters of substituted and unsubstituted benzoic acids, for example, 4-tert-butylphenyl salicylate, phenyl salicylate, octylphenyl salicylate, dibenzoylresorcinol, bis(4-tert-butylbenzoyl)-resorcinol, benzoylresorcinol, 2,4-di-tert-butylphenyl 3,5-di-tert-butyl-4-hydroxybenzoate and hexadecyl 3,5-di-tert-butyl-4-hydroxybenzoate.

2.4. Acrylates, for example ethyl α-cyano-β,β-diphenylacrylate, isooctyl α-cyano-β,β-diphenylacrylate,

methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate and N-(β-carbomethoxy-β-cyanovinyl)-2-methylindoline.

2.5. Nickel compounds, for example nickel complexes of 2,2′-thio-bis-[4-(1,1,3,3-tetramethylbutyl)-phenol], such as the 1:1 or 1:2 complex, with or without additional ligands such as n-butylamine, triethanolamine or N-cyclohexyldiethanolamine, nickel dibutyldithiocarbamate, nickel salts of 4-hydroxy-3,5-di-tert-butylbenzyl-phosphonic acid monoalkyl esters, e.g. of the methyl or ethyl ester, nickel complexes of ketoximes, e.g. of2-hydroxy-4-methyl-phenyl undecyl ketoxime, nickel complexes of 1-phenyl-4-lauroyl-5-hydroxypyrazole, with or without additional ligands.

2.6. Sterically hindered amines, for example bis(2,2,6,6-tetramethyl-piperidyl) sebacate, bis(1,2,2,6,6-pentamethylpiperidyl) sebacate, bis(1,2,2,6,6-pentamethylpiperidyl) n-butyl-3,5-di-tert-butyl-4-hydroxy-benzylmalonate, the condensation product of 1-(2-hydroxyethyl)-2,2,6,6-tetramethyl-4-hydroxypiperidine and succinic acid, the condensation product of N,N′-bis(2,2,6,6-tetramethyl-4-piperidyl)hexamethylenediamine and4-tert-octylamino-2,6-dichloro-1,3,5-triazine, tris(2,2,6,6-tetramethyl-4-piperidyl) nitrilotriacetate, tetrakis-(2,2,6,6-tetramethyl-4-piperidyl)-1,2,3,4-butane-tetracarboxylate, 1,1′-(1,2-ethanediyl)bis-(3,3,5,5-tetramethylpiperazinone).

2.7. Oxalic acid diamides, for example 4,4′-dioctyloxyoxanilide, 2,2′-dioctyloxy-5,5′-di-tert-butyloxanilide, 2,2′-didodecyloxy-5,5′-di-tert-butyloxanilide, 2-ethoxy2′-ethyloxanilide, N,N′-bis(3-dimethylamino-propyl)oxalamide, 2-ethoxy-5-tert-butyl-2′-ethyloxanilide and its mixture with 2-ethoxy-2′-ethyl-5,4′-di-tert-butyloxanilide and mixtures of ortho- and para-methoxy-disubstituted oxanilides and mixtures of o- and p-ethoxy-disubstituted oxanilides.

2.8. 2-(2-Hydroxyphenyl)-1,3,5-triazines, for example 2,4,6-tris(2- hydroxy-4-octyloxyphenyl)-1,3,5-triazine, 2-(2-hydroxy-4-octyloxy-phenyl)-4,6-bis(2,4-dimethylphenyl)-1,3,5-triazine, 2-(2,4-dihydroxy-phenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine.

3. Metal deactivators, for example N,N′-diphenyloxalic acid diamide, N-salicylal-N′-salicyloylhydrazine, N,N′-bis(salicyloyl)hydrazine, N,N′-bis(3,5-di-tert-butyl-4-hydroxyphenylpropionyl)hydrazine, 3-salicyl-oylamino-1,2,4-triazole, bis(benzylidene)oxalodihydrazide.

4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tertbutylphenyl) pentaerythritol diphosphite, tristearyl sorbitol triphosphite, tetrakis(2,4-di-tert-butylphenyl) 4,4′-biphenylene diphosphonite, 3,9-bis(2,4-di-tert-butylphenoxy)2,4,8,10-tetraoxa-3,9-diphosphaspiro[5.5]-undecane.

5. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis (β-dodecylmercapto)propionate.

6. Polyamide stabilisers, for example, copper salts in combination with iodides and/or phosphorus compounds and salts of divalent manganese.

7. Basic co-stabilisers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example Ca stearate, Zn stearate, Mg stearate, Na ricinoleate and K palmitate, antimony pyrocatecholate or zinc pyrocatecholate.

8. Nucleating agents, for example, 4-tert.butyl-benzoic acid, adipic acid, diphenylacetic acid.

9. Fillers and reinforcing agents, for example, calcium carbonate, silicates, glass fibres, asbestos, talc, kaolin, mica, barium sulfate, metal oxides and hydroxydes, carbon black, graphite.

10. Other additives, for example, plasticisers, lubricants, emulsifiers, pigments, optical brighteners, flameproofing agents, antistatic agents and blowing agents.

Of particular value in the instant compositions are the benzotriazoles of high molecular weight and low volatility such as 2-[2-hydroxy-3,5-di(alpha,alpha-dimethylbenzyl)phenyl]-2H-benzotriazole, 2-(2-hydroxy-3,5-di-tert-octylphenyl)-2H-benzotriazole, 2-(2-hydroxy-3-alpha-alpha-dimethylbenzyl-5-tert-octyl-phenyl)-2H-benzotriazole, 2-(2-hydroxy-3-tert-octyl-5-alpha,alpha-dimethylbenzylphenyl)-2H-benzotriazole, 2-(2-hydroxy-3,5-di-tert-amylphenyl)-2H-benzotriazole, 2-[2-hydroxy-3-tert-butyl5-(2-(omega-hydroxy-octa-(ethyleneoxy)-carbonyl)-ethylphenyl]-2H-benzotriazole and the 5-chloro compounds corresponding to each of the above named benzotriazoles.

Most preferably the benzotriazoles useful in the instant compositions are 2-[2-hydroxy-3,5-di-(alpha,alpha-dimethylbenzyl)phenyl]-2H-benzotriazole and2-[2-hydroxy-3-tert-butyl-5-(2-(omega-hydroxy-octa-(ethyleneoxy)-carbonyl)ethylphenyl]-2H-benzotriazole.

Of particular interest in connection with the stabilization of polyvinyl halides are formulations containing (1) a polyvinyl halide, (2) a thermal stabilizer and (3) an $NOR_1$ hindered amine derivative of the instant invention, preferably a $NOR_1$ derivative wherein $R_1$ is not an acyl group. Thermal stabilizers are generally known. Included among such derivatives are organotin carboxylate compounds characterized by having an oxygen atom bonded directly to the tin atom. Such compounds may be identified as carboxylates or alcoholates containing Sn-ORad, Sn-OOCRad, RadCOO-Sn-O-Sn-OOCRad or Sn-OOCCH = CHCOORad groups wherein "Rad" defines a series of alkyl, cycloalkyl, aryl or aralkyl substituents. Other organotins include organotin mercaptoestes and organotin mercaptides, the former containing groups of $Sn-[S(CH_2)_u-COORad]$ while the latter correspond to the general formula (RadS)-Sn-Rad.

Other categories of thermal stabilizers are barium/cadmium, barium/zinc, calcium/zinc, atimony and lead compounds, including salts of fatty acids.

These formulations can contain optional ingredients such as titanium dioxide, other pigments, fillers, plasticizers, and the like, as well as the UV absorbers and antioxidants noted hereinabove.

The following examples further illustrate the embodiments of the instant invention. All parts given are by weight unless otherwise noted.

## Example 1: Light Stabilization of Polypropylene

Polypropylene powder (Hercules Profax 6501) stabilized with 0.2 % octadecyl 3,5-di-tert.butyl-4-hydroxy hydrocinnamate antioxidant is thoroughly blended with 0.1 % of the stabilizer indicated in the table. The blended materials are then milled on a two-roll mill at 182 °C for 5 minutes, after which time the stabilized polypropylene is sheeted from the mill and allowed to cool. The milled polypropylene is then cut into pieces and compression molded on a hydraulic press at 250 °C and 175 psi ($1.2 \times 10^6$ Pa) into 5 mil (0.127 mm) films. The sample is exposed in a fluorescent sunlight/black light chamber until failure. Failure is taken as the hours required to reach 0.5 carbonyl absorbance by infrared spectroscopy on the exposed films.

Table 1

| Stabilizer | Hours to Failure |
|---|---|
| none | 340 |
| 2 | 990 |
| 3 | 1710 |
| 5 | 1430 |
| 8 | 1250 |
| 10 | 1750 |

## Example 2:

This example illustrates the performance of the instant compounds in polyvinyl chloride formulations. In particular, it illustrates the manner in which the instant compounds minimize the detrimental effect on thermal stability during processing of such formulations, which detrimental effect is encountered with conventional hindered amine light stabilizers.

The following rigid polyvinyl chloride formulations are prepared.

| | Parts | |
|---|---|---|
| | A | B |
| polyvinyl chloride resin[1] | 100.0 | 100.0 |
| tin mercaptide[2] | 1.5 | |
| tin carboxylate[3] | - | 2.5 |
| methacrylic acid/ester processing aid[4] | 1.5 | 1.5 |
| acrylic impact modifier[5] | 6.0 | 6.0 |
| paraffin wax | 1.0 | 0.3 |
| polyethylene wax | 0.1 | 0.1 |
| calcium stearate | 1.0 | - |
| brown pigment[6] | 0.9 | 0.9 |
| pigment[7] | 0.1 | 0.1 |

1 - GEON 103EP-76 from B.F. Goodrich Co.
2 - THERMOLITE T-137 from M&T Chemicals
3 - IRGASTAB T-634 from CIBA-GEIGY Corp.
4 - ACRYLOID K120N from Rohm and Haas
5 - ACRYLOID K323B from Rohm and Haas
6 - CROMOPHTAL BROWN from CIBA-GEIGY Corp.
7 - MONARCH X-3228 from CIBA-GEIGY Corp.

The ingredients are blended together with one part per hundred of the indicated stabilizer. Thereafter, 60 gram samples are tested in a Brabender Plasti-Corder at 190 °C. Changes in torque are measured over time. Longer times to degradation are indicative of reduced detrimental effects of the light stabilizer on the thermal stability of the PVC during processing.

Table 2

| Stabilizer | Degradation Time (min) | |
|---|---|---|
| | PVC-A | PVC-B |
| none | 24.0 | 20.0 |
| A | 14.5 | 14.0 |
| 6 | 23.0 | 24.5 |
| 10 | 26.0 | 23.5 |
| 14 | 25.0 | 23.5 |

A = bis(2,2,6,6-tetramethylpiperidin-4-yl)-sebacate

Example 3:

The polyvinyl chloride formulation B of example 2 is blended with one part per 100 parts of PVC of the stabilizers indicated in table 3. The samples are milled on a two roll mill (front roll 171 °C - back roll 165 °C) for a period of three minutes after band formation. The resulting material is then compression molded (temperature 182 °C, 2 minutes contrapressure, 1 minute pumping pressure, 2 minutes full pressure, cool to 38 °C) and cut into test plaques (5.1 cm x 5.1 cm). The plaques are exposed in a Xenon Arc Weatherometer at black panel temperature of 60-66 °C and relative humidity of 25-35 %. Samples are withdrawn at periodic intervals and ΔE values measured according to ASTMD-1925-63T utilizing an Applied Color

System Spectro-Sensor II Colorimeter. Higher values are indicative of less stability.

Table 3

| Stabilizer | ΔE |
|---|---|
| none | 6.7 |
| 6 | 2.8 |
| 7 | 5.0 |
| 21 | 4.7 |

Example 4:

This example illustrates the stabilization performance of the instant compounds in acrylonitrile/butadiene/styrene polymer.

The ABS polymer (DOW 342EZ) is blended with 4 %, by weight, $TiO_2$-containing pigment and with the indicated amounts of stabilizer, compounded on a two roll mill at 150°C/163°C for five minutes and compression molded at 218°C to form 5 cm x 5 cm x 0.2 cm test plaques. The plaques are then exposed in the Interior Automative Xenon Arc Weatherometer at 89°C and 100 % relative humidity in the dark cycle. Yellowness Index values and ΔE values are determined originally and after 400 hours exposure.

| | Conc. | YI (ΔE) after hours | |
|---|---|---|---|
| Stabilizer | (% by wt.) | 0 | 400 |
| - | - | 14 | 43 (15.1) |
| 1 | 1.0 | 14 | 28 (7.3) |
| B/1 | 0.5/0.5 | 14 | 27 (6.4) |
| 9 | 1.0 | 14 | 30 (8.5) |
| B/9 | 0.5/0.5 | 14 | 29 (8.0) |
| Stabilizer B = 2-[3,5-di(1,1-dimethylpropyl)-2-hydroxyphenyl]-benzotriazole | | | |

## Claims

1. A stabilized composition comprising
a) a polyolefin or an organic polymer containing hetero atoms, double bonds or aromatic rings and
(b) an effective stabilizing amount of a substituted hindered amine derivative of the formula (A)

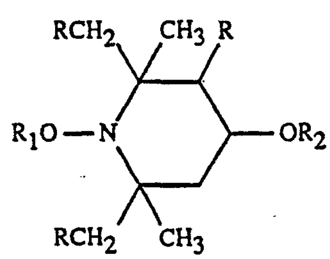

(A)

wherein
R is hydrogen or methyl,
$R_1$ is $C_1$-$C_8$alkyl, $C_2$-$C_{18}$alkenyl, $C_2$-$C_{18}$alkynyl, $C_5$-$C_{12}$cycloalkyl, $C_6$-$C_{10}$bicycloalkyl, $C_5$-$C_8$cycloalkenyl, $C_6$-$C_{10}$aryl, $C_7$-$C_9$aralkyl, $C_7$-$C_9$aralkyl substituted by $C_1$-$C_4$alkyl or $C_6$-$C_{10}$aryl, or $R_1$ is
$-\overset{O}{\overset{\|}{C}}-D$ wherein D is $C_1$-$C_{18}$alkyl, $C_1$-$C_{18}$ alkoxy, phenyl, phenyl substituted by hydroxy, $C_1$-$C_4$alkyl or $C_1$-$C_4$alkoxy, or amino or amino mono- or disubstituted by $C_1$-$C_{12}$alkyl or phenyl and
$R_2$ is hydrogen, $C_1$-$C_{18}$alkyl optionally interrupted by one or more oxygen atoms, $C_2$-$C_{12}$alkenyl, $C_6$-$C_{10}$aryl, $C_7$-$C_{18}$aralkyl, glycidyl, a monovalent acyl radical of an aliphatic, cycloaliphatic, araliphatic or aromatic carboxylic acid, or of a carbamic acid.

2. The composition of claim 1, wherein in component (b) $R_1$ is $C_1$-$C_{18}$alkyl, $C_2$-$C_{18}$alkenyl, $C_5$-$C_{12}$cycloalkyl, $C_7$-$C_9$aralkyl or $C_7$-$C_9$aralkyl substituted by alkyl or aryl.

3. The composition according to claim 1 wherein the compound of component (b) is selected from the group consisting of
1,4-diacetoxy-2,2,6,6-tetramethylpiperidine
1-acetoxy-4-hydroxy-2,2,6,6-tetramethylpiperidine
(1-acetoxy-2,2,6,6-tetramethylpiperidin-4-yl)-4-hydroxy-3,5-di-tert.butylbenzoate
1,4-di-(2-ethylhexanoyloxy)-2,2,6,6-tetramethylpiperidine
1,4-di-(4-hydroxy-3,5-di-tert-butylbenzoyloxy)-2,2,6,6-tetramethylpiperidine
n-butyl-(4-benzoyloxy-2,2,6,6-tetramethylpiperidin-4-yl)carbonate
1-carbamoyloxy-4-benzoyloxy-2,2,6,6-tetramethylpiperidine
4-benzoyloxy-1-ethoxy-2,2,6,6-tetramethylpiperidine
1,4-dibenzoyloxy-2,2,6,6-tetramethylpiperidine
4-benzoyloxy-1-(alpha-methylbenzyloxy)-2,2,6,6-tetramethylpiperidine
1,4-dimethoxy-2,2,6,6-tetramethylpiperidine
4-benzoyloxy-1-methoxy-2,2,6,6-tetramethylpiperidine
(1-cyclohexyloxy-2,2,6,6-tetramethylpiperidin-4-yl)-3,5-di-t.butyl-4-hydroxybenzoate
1-cyclohexyloxy-4-octadecanoyloxy-2,2,6,6-tetramethylpiperidine
4-benzoyloxy-1-benzyloxy-2,2,6,6-tetramethylpiperidine

4. The composition of claim 1, wherein component (a) is a polyolefin which is a homopolymer or copolymer of an alpha-olefin.

5. The composition of claim 4, wherein the polyolefin is selected from the group consisting of polypropylene, low density polyethylene, medium density polyethylene, high density polyethylene, linear low density polyethylene, poly(butene-1), ethylene/vinyl acetate copolymer, ethylene/propylene copolymer and copolymers of ethylene or of propylene with other alpha-olefins.

6. The composition of claim 5, wherein the polyolefin is polypropylene, high density polyethylene, ethylene/propylene copolymer or a copolymer of ethylene or of propylene with another alpha-olefin.

7. The composition of claim 1, wherein component (a) is polybutadiene, polyisoprene, polystyrene, a styrene copolymer, a styrene graft polymer, a halogen-containing vinyl homo- or copolymer, a polymer derived from an alpha,beta-unsaturated acid, a polymer derived from an unsaturated alcohol or its acyl or acetyl derivative, a polyacetal, a polyurethane, a polycarbonate, a polyamide or a polyester.

8. The composition of claim 7, wherein said organic polymer is polyvinyl chloride, a polyurethane or acrylonitrile/butadiene/styrene.

9. The composition of claim 8, wherein said organic polymer is polyvinyl chloride containing a thermal stabilizer therein.

10. The composition of claim I which additionally contains a phenolic antioxidant.

11. The composition of claim 1, which additionally contains a UV absorber selected from the group consisting of benzophenons, benzotriazoles, benzoic acid esters, acrylic acid derivatives, organic nickel compounds and oxanilides.

12. The composition of claim 1 containing 0.01 to 5 % by weight of the compound of formula (A).

13. The composition of claim 1 containing 0.05 to 2 % by weight of the compound of formula (A).

14. A method for stabilizing a polyolefin or an organic polymer containing hetero atoms, double bonds or aromatic rings against oxidative, thermal and actinic degradation which comprises incorporating into said polyolefin an effective stabilizing amount of a compound of formula (A) as defined in claim 1.

European Patent Office

# EUROPEAN SEARCH REPORT

Application Number

EP 89 81 0773

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | JOURNAL OF POLYMER SCIENCE: POLYMER CHEMISTRY EDITION, vol. 22, January 1984, John Wiley & Sons, Inc.; "T. KURUMADA et al.: "The effect of N-substituents of hindered amine on photo-oxidation of polypropylene", page 277-281<br>* Whole document *<br>----- | 1-14 | C 08 K 5/343 |
| | | | **TECHNICAL FIELDS SEARCHED (Int. Cl.5)** |
| | | | C 08 K<br>C 08 L |

The present search report has been drawn up for all claims

| Place of search | Date of completion of the search | Examiner |
|---|---|---|
| THE HAGUE | 29-01-1990 | HOFFMANN K.W. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document